(19) Europäisches Patentamt
European Patent Office
Office européen des brevets

(11) **EP 2 083 511 B1**

(12) **FASCICULE DE BREVET EUROPEEN**

(45) Date de publication et mention
de la délivrance du brevet:
**22.01.2014 Bulletin 2014/04**

(51) Int Cl.:
***H02M 3/156*** *(2006.01)*     ***H02J 7/34*** *(2006.01)*
***H04B 1/40*** *(2006.01)*

(21) Numéro de dépôt: **08305009.6**

(22) Date de dépôt: **25.01.2008**

(54) **Alimentation à pile pour èmetteur radiofréquences**

Batteriebetrieb für Radiofrequenzsender

Battery power supply for radio frequency transmitter

(84) Etats contractants désignés:
**AT BE BG CH CY CZ DE DK EE ES FI FR GB GR HR HU IE IS IT LI LT LU LV MC MT NL NO PL PT RO SE SI SK TR**

(43) Date de publication de la demande:
**29.07.2009 Bulletin 2009/31**

(73) Titulaire: **Actaris SAS**
**92100 Boulogne-Billancourt (FR)**

(72) Inventeur: **Bulteau, Serge**
**69840 Julienas (FR)**

(74) Mandataire: **Howson, Richard G.B. et al**
**Kilburn & Strode LLP**
**20 Red Lion Street**
**London WC1R 4PJ (GB)**

(56) Documents cités:
**EP-A- 0 613 257     EP-A- 0 718 951**
**DE-A1-102004 057 690     FR-A- 2 660 093**
**US-A1- 2005 275 392**

## Description

La présente invention concerne les modules émetteurs radiofréquences dont l'alimentation est réalisée au moyen d'au moins une pile.

Un domaine d'application particulièrement concerné par l'invention, bien que non limitatif, est celui des modules radio utilisés dans le relevé à distance, ou télérelevé, des compteurs d'énergie, du type compteurs d'eau, d'énergie thermique, de gaz ou d'électricité.

Dans ce domaine d'application, la consommation moyenne d'énergie utilisée reste assez faible, ce qui permet en général d'utiliser des piles de faible capacité et de petite taille, par exemple une pile AA de 3,6 Volts. Cependant, au moment où le module transmet un signal radiofréquence, la pile doit être capable de fournir sur une courte durée, par exemple de l'ordre de la minute, un courant instantané assez élevé (de l'ordre de quelques centaines de mA). La puissance requise à ce moment peut être incompatible avec l'utilisation d'une pile de petite taille et de faible capacité, et il est souvent nécessaire de trouver un compromis entre la puissance à délivrer, la taille de la pile, la gamme de température d'utilisation, ainsi que la durée de vie du module, de façon à garantir les caractéristiques de la pile pendant la durée d'exploitation du module.

De plus, l'impédance interne de la pile va induire une chute de tension d'autant plus importante que le pic de courant est élevé, et l'on recherche ainsi généralement à utiliser des piles présentant des impédances internes les plus faibles possible.

Une première solution consiste à surdimensionner la pile. Cette solution est bien entendu non avantageuse non seulement en terme d'encombrement, mais aussi en terme d'efficacité puisque dans ce cas, seule une partie de la capacité disponible de la pile sera utilisée, le reste n'étant d'aucune utilité.

Une autre solution connue, par exemple du document EP 0 718 951, consiste à associer une pile à un circuit d'assistance comprenant un accumulateur ou un ou plusieurs super condensateurs, ce circuit d'assistance étant connecté en permanence en parallèle entre la pile et le module émetteur radiofréquence à alimenter. En dehors des phases d'émission, le circuit d'assistance est constamment chargé de manière à pouvoir délivrer la puissance qu'il a accumulée au moment de la transmission, tout en limitant la puissance que doit fournir la pile au moment du pic de courant.

Cette solution comporte cependant un certains nombres d'inconvénients :

Tout d'abord, les composants mis en jeu dans ces circuits d'assistance sont onéreux et difficiles à trouver sur le marché pour les valeurs requises.

En outre, la fiabilité des composants n'est pas garantie pour des durées de fonctionnement de plusieurs années, voire de plusieurs dizaines d'années, correspondant à la durée de vie classique garantie pour les modules de télérelevé. De plus, leurs performances se dégradent rapidement avec le temps. Notamment, leur résistance en série équivalente (ESR) augmente avec le temps, ce qui limite leur efficacité au moment où le pic de courant doit être délivré.

De plus, ces composants présentent en général un courant de fuite important, ce qui contraint à surdimensionner la pile pour pallier à la perte d'énergie résultante.

Enfin, pour les valeurs mises en jeu, les super condensateurs utilisés dans les solutions restent des composants d'encombrement non optimisé.

Une troisième solution connue, notamment décrite dans le document EP 0 613 257, consiste à charger un condensateur standard à une tension de stockage supérieure à la tension de la pile, puis à délivrer le pic de courant à la fin de la charge, à une tension inférieure à la tension de stockage du condensateur. Plus précisément, ce document décrit un dispositif d'alimentation pour un module émetteur radiofréquences comportant au moins une pile et un condensateur formant circuit de stockage d'énergie électriquement connecté en parallèle entre la pile et le module émetteur radiofréquences, le dispositif d'alimentation comportant en outre :

- un convertisseur élévateur de tension continu-continu pour charger le condensateur à une tension de stockage supérieure à la tension délivrée par la pile pendant une première phase de charge du condensateur;

- un régulateur de tension commandé en série entre le condensateur et le module émetteur radiofréquences qui provoque la décharge du condensateur et abaisse la tension de stockage à une valeur prédéterminée de tension d'alimentation délivrée au module pendant une deuxième phase de décharge ;

- un module de contrôle apte à déconnecter d'une part, le module du condensateur pendant la première phase de charge, et d'autre part, le convertisseur de tension continu-continu de la pile pendant la deuxième phase de décharge.

On s'intéresse dans la suite plus particulièrement aux moyens élévateurs de tension utilisés entre la pile et le condensateur de stockage.

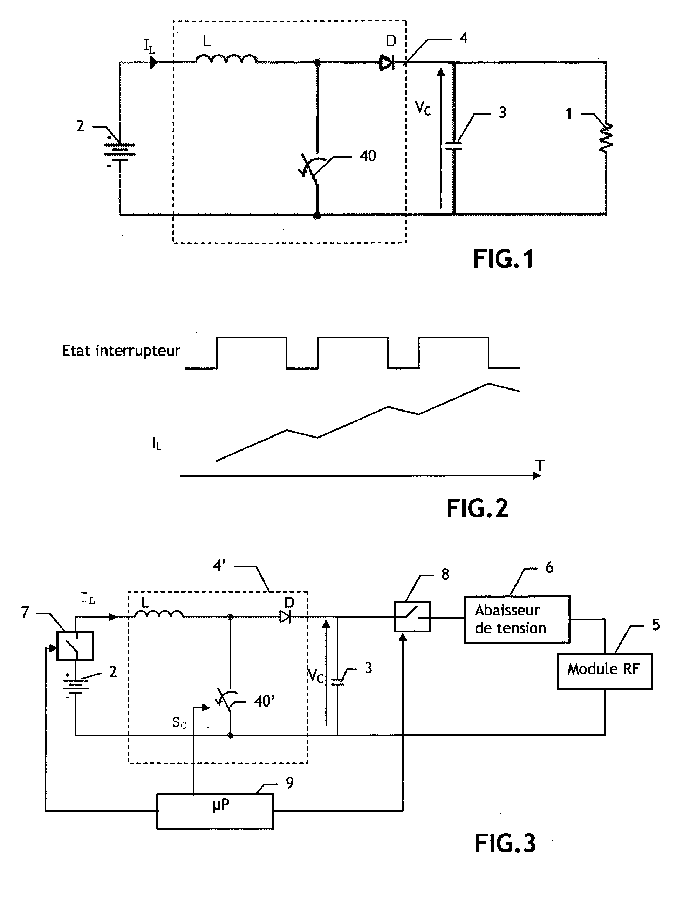

Un convertisseur élévateur de tension continu-continu, tel que préconisé dans le document EP 0 613 257, est généralement utilisé dans la configuration du circuit selon le schéma électrique représenté sur la figure 1. Sur cette figure, une charge 1 est connectée aux bornes d'une pile 2 qui vient charger un condensateur 3 via un convertisseur élévateur de tension continu-continu 4. Le convertisseur élévateur de tension 4 comporte essentiellement une inductance L et une diode connectées en série, ainsi que des moyens de contrôle (non représentés) d'un interrupteur 40. La figure 2 illustre l'évolution temporelle de l'état fermé/ouvert de l'interrupteur 40, ainsi que le courant correspondant $I_L$ dans l'inductance L pendant la phase de charge du condensateur. Tant que la tension $V_C$ aux bornes du condensateur 3 est inférieure à la valeur de tension de stockage souhaitée, l'interrupteur 40 est commandé de manière à occuper alternativement un état fermé (représenté par convention par l'état haut sur la figure 2) et un état ouvert (représenté par convention par un état bas sur la figure 2). Lorsque l'interrupteur 40 est dans l'état fermé, le courant $I_L$ dans l'inductance L augmente d'une valeur proportionnelle à la durée pendant laquelle l'interrupteur est fermé. Lorsque l'interrupteur 40 est dans l'état ouvert, le courant $I_L$ va charger le condensateur 3 au travers de la diode D. Le courant $I_L$ va donc décroître d'une valeur proportionnelle à la durée pendant laquelle l'interrupteur 40 reste ouvert.

Dans les convertisseurs continus-continus conventionnels, la commande de l'interrupteur est faite par l'intermédiaire d'un oscillateur qui génère un signal de commande périodique rectangulaire, de période constante, correspondant à celui représenté sur la figure 2. Lorsque la tension $V_C$ atteint la valeur désirée, la génération du signal de commande est stoppée. Dès que la tension $V_C$ décroît suite à une activation de la charge 1, la génération du signal de commande de l'interrupteur est réactivée.

Le fonctionnement précédent est optimisé pour pouvoir délivrer un pic de courant à la charge dès que le condensateur est chargé, puis maintenir la tension de stockage à la valeur désirée, et ce, quelle que soit la valeur de courant demandée par la charge. Ainsi, au démarrage, le courant $I_L$ va augmenter sans limitation particulière, et dans le régime permanent, la tension $V_C$ va rester constante et le courant $I_L$ dans l'inductance est directement fonction du courant de charge.

Le fonctionnement précédent n'est cependant pas adapté aux applications considérées ici dans lesquelles l'élévateur de tension est connecté à la pile pour charger le condensateur alors qu'aucune charge (ici le module d'émission radiofréquences) n'est encore connectée, puis déconnecté de la pile lorsque la tension de stockage $V_C$ désirée est atteinte et que le condensateur est connecté à la charge.

En outre, les circuits connus ne permettent généralement pas de limiter le courant de la pile pendant la phase de charge du condensateur. Pour éviter de stresser la pile, il est donc nécessaire dans ce cas de prévoir soit un générateur de courant, soit un limiteur de courant entre la pile et le convertisseur élévateur de tension. Outre le fait que cela augmente le coût du dispositif d'alimentation du fait de l'ajout d'un composant additionnel, le générateur de courant et le limiteur introduisent des pertes qui réduisent l'efficacité en termes de transfert d'énergie.

Quelques convertisseurs élévateurs de tension connus intègrent une fonction de limitation de courant, mais ces convertisseurs sont peu nombreux et plus coûteux.

La présente invention a pour but de proposer, à moindre coût, un dispositif d'alimentation utilisant un moyen élévateur de tension associé à une commande particulière permettant notamment de maîtriser totalement le courant de la pile pendant le cycle de charge du condensateur.

Plus précisément, l'invention a pour objet un dispositif d'alimentation tel que défini dans la revendication 1.

Dans un mode de réalisation préféré, le dispositif d'alimentation comporte en outre un régulateur de tension commandé apte à être connecté en série entre le condensateur et le module émetteur radiofréquences, ledit régulateur abaissant la tension de stockage à une valeur prédéterminée de tension d'alimentation délivrée au module pendant la deuxième phase de décharge.

Le module de contrôle est de préférence adapté pour déclencher ladite première phase de charge juste avant la délivrance du pic de courant, à un instant suffisamment antérieur à l'instant de délivrance du pic de courant pour permettre la charge complète du condensateur.

L'invention a également pour objet un module de télérelevés pour compteur d'énergie, comportant un tel dispositif d'alimentation.

L'invention et les avantages qu'elle procure seront mieux compris au vu de la description ci-après d'un exemple de réalisation préféré d'un dispositif d'alimentation conforme à l'invention, faite en référence aux figures annexées dans lesquelles :

- la figure 1 illustre schématiquement un dispositif d'alimentation à pile pour émetteur radiofréquences selon l'art antérieur avec un convertisseur de tension continu-continu utilisé comme élévateur de tension ;
- la figure 2 illustre temporellement la commande du convertisseur de la figure 1 et l'allure du courant de charge du condensateur correspondant ;
- la figure 3 illustre schématiquement un dispositif d'alimentation à pile pour émetteur radiofréquences selon un mode préféré de l'invention;
- la figure 4 illustre temporellement la commande particulière du moyen élévateur de tension de la figure 3 et l'allure du courant de charge du condensateur correspondant ;
- les figures 5a à 5b sont des exemples de courbes d'évolution d'une part de la tension de stockage dans le condensateur, et d'autre part, d'un des paramètres du signal de commande, obtenues par simulation.

Sur la figure 3, on a représenté schématiquement un dispositif d'alimentation selon le mode de réalisation préféré de l'invention. Ce dispositif permet la charge d'un condensateur de stockage standard 3 à partir d'une pile 2, au travers d'un moyen élévateur de tension 4', puis la décharge de ce condensateur 3 lorsque le module RF 5 est activé. Le dispositif comporte de préférence également, en aval du condensateur de stockage, des moyens abaisseurs de tension 6 permettant, lors de la phase de décharge du condensateur 3 sur sollicitation du module radiofréquence 5, d'abaisser la tension stockée à la valeur nécessaire pour le module. On rappelle également que, dans le mode de réalisation préféré, le module radiofréquence n'est pas connecté au condensateur pendant la phase de charge, et que, lors de la phase de décharge du condensateur, ce dernier n'est plus connecté à la pile 2. Ceci est rendu possible grâce à deux moyens d'interruption 7, 8 commandés par un module de contrôle 9 de type microprocesseur.

On s'intéresse dans la suite uniquement à ce qui se passe lors de la phase de charge du condensateur (moyens d'interruption 7 fermés et moyens d'interruption 8 ouverts).

Le moyen élévateur de tension 4' utilisé conformément à l'invention et schématisé sur la figure 3 est assez semblable structurellement au convertisseur élévateur de tension 4 décrit en référence à la figure 1, du fait qu'il comporte une inductance L et une diode D connectées en série entre la pile 2 et le condensateur de stockage 3, et un interrupteur 40'. L'analogie avec un convertisseur DC-DC s'arrête cependant là. En effet, dans l'application particulière non limitative envisagée, le rôle du moyen élévateur de tension 4' est d'élever la tension de la pile, typiquement de l'ordre de 3 Volts, à une valeur de tension prédéfinie, située typiquement entre 30 et 60 Volts, pendant la phase de charge du condensateur. On cherchera en outre à limiter le courant à une valeur située par exemple à 10 mAmpères.

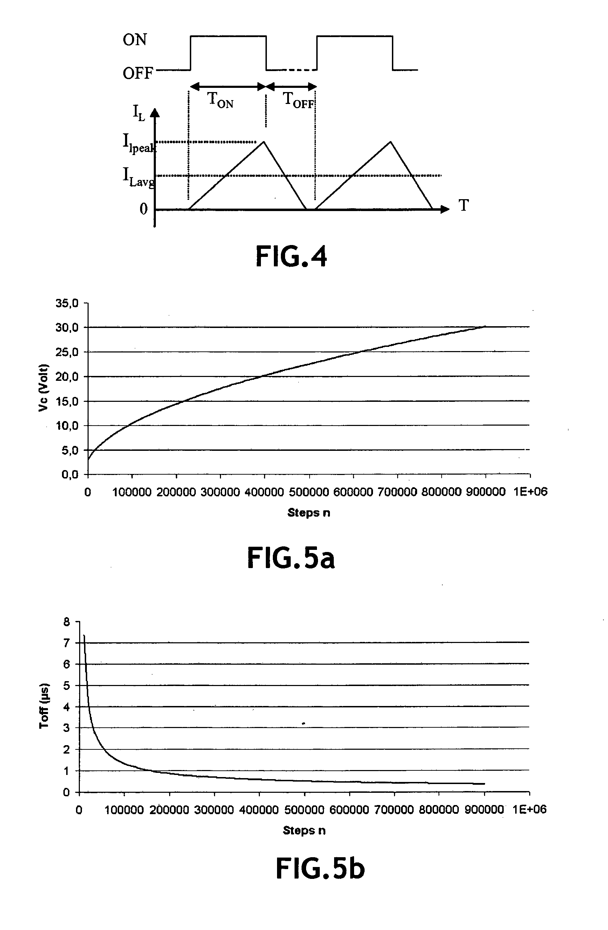

La particularité de l'invention réside dans la façon dont cet interrupteur 40' va être commandé sur une phase de charge du condensateur, le signal de commande étant délivré avantageusement par le module de contrôle 9 de type microprocesseur déjà présent dans le dispositif. Ceci va à présent être explicité en référence à la figure 4.

Le signal de commande $S_C$ est, tout comme dans le cas de la figure 2, un signal périodique alternant les durées $T_{ON}$ pendant lesquelles l'interrupteur 40' est fermé et les durées $T_{OFF}$ pendant lesquelles l'interrupteur 40' est ouvert, mais la période du signal de commande est variable. Plus précisément, pendant toute la durée correspondant à la phase ou cycle de charge du condensateur 3, la durée $T_{ON}$ pendant laquelle l'interrupteur 40' est dans l'état fermé est fixe d'une période à l'autre, et correspond à une valeur prédéterminée qui permet au courant $I_L$ de varier depuis une valeur nulle jusqu'à une valeur prédéfinie $I_{Lpeak}$ correspondant à la valeur maximum permise compatible avec ce que la pile peut supporter.

La durée $T_{OFF}$ pendant laquelle l'interrupteur 40' est dans l'état ouvert est en revanche variable d'une période à l'autre, calculée de manière à permettre au courant $I_L$ dans l'inductance L de décroître jusqu'à zéro. Ainsi, lors de la durée $T_{ON}$ suivante, on garantit que le courant $I_L$ partira bien d'une valeur nulle, et que le courant moyen $I_{Lavg}$ dans l'inductance L n'augmente pas.

L'augmentation $\Delta I_L+$ du courant dans l'inductance L pendant la durée $T_{ON}$ est donnée par la relation suivante :

$$\Delta I_L+ = \left(I_{Lpeak}-0\right)=\frac{V_{DC}}{L}T_{ON} \quad \text{(I)}$$

Avec $V_{DC}$, la tension aux bornes de la pile 2.

Dans la relation (I), les valeurs de $V_{DC}$ et de L sont constantes, et la valeur $I_{Lpeak}$ est prédéterminée, de sorte qu'il est possible de calculer la valeur fixe $T_{ON}$.

Avec les valeurs suivantes prise à titre d'exemple,

L=1mH
C (capacité du condensateur 3) = 1 mF
$V_{DC}$ = 3V
$I_{Lpeak}$= 10mA= 2 x $I_{Lavg}$
On obtient $T_{ON}$ = 3,33 µs

Par ailleurs, pendant la durée $T_{OFF}$, le courant dans l'inductance va décroître d'une valeur $\Delta I_L$- qui est égale à l'augmentation du courant $\Delta I_L+$, et qui peut s'écrire selon la relation suivante :

$$\Delta I_L- = \frac{V_C-V_{DC}}{L}T_{OFF} = \Delta I_L+ \quad \text{(II)}$$

Dans la relation (II), les valeurs de $V_{DC}$ et de L sont constantes, et la valeur $\Delta I_L+$ est prédéterminée, de sorte que la durée $T_{OFF}$ ne dépend que de la tension $V_C$ aux bornes du condensateur 3.

Or, la loi de variation de la tension $V_C$ peut être déterminée à partir de la relation suivante qui exprime l'énergie transférée par l'inductance L au condensateur 3 entre deux périodes successives du signal de commande :

$$\frac{1}{2}LI_L^2 = \frac{1}{2}C\left(V_{C(n)}^2-V_{C(n-1)}^2\right) \text{(III)}$$

dans laquelle l'indice n correspond à la période en cours du signal de commande, et l'indice (n-1) représente la période précédente.

On peut donc, en combinant les relations (II) et (III), déterminer la valeur de $T_{OFF}$ à chaque période du signal de commande.

Bien que la durée $T_{OFF}$ pourrait être déterminée en temps réel en effectuant une mesure de la tension $V_C$, puis en calculant la durée $T_{OFF}$ par application des relations ci-dessus, la présente invention tire avantage du fait que, dans l'application envisagée, la valeur de la tension $V_C$ voulue en fin de phase de charge est connue à l'avance, de sorte qu'il est possible de prédéfinir complètement les caractéristiques du signal de commande $S_C$, à savoir sa durée totale (nombre de périodes) et pour chaque période, les durées $T_{ON}$ et $T_{OFF}$.

Les figures 5a à 5c illustrent les résultats d'une simulation en prenant, à titre d'exemple non limitatif, les valeurs de composants déjà mentionnées précédemment, et en fixant la tension de charge $V_C$ voulue en fin de phase de charge à 30 Volts. Plus précisément :

- la figure 5a illustre la variation de la tension $V_C$ aux bornes du condensateur (1 mF) en fonction de la période, conformément à la relation (III) ci-dessus.
- la figure 5b illustre la variation de la durée $T_{OFF}$ en fonction de la période (combinaison des relations (II) et (III) précédentes).

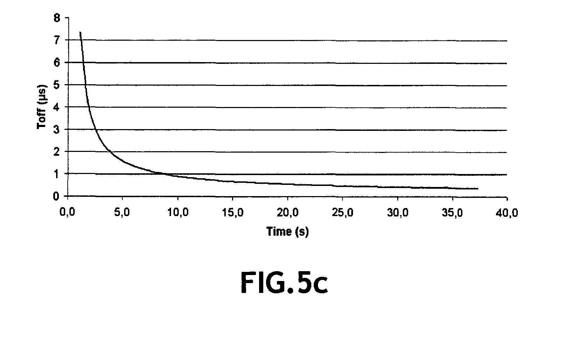

- la figure 5c illustre la variation temporelle de la durée $T_{OFF}$.

Ainsi, on note que, pendant une phase de charge du condensateur, la durée $T_{OFF}$ décroît avec le temps.

Les caractéristiques du signal $S_C$ sont ainsi complètement prédéfinies, et mémorisées dans le dispositif pour utilisation par le module de contrôle 9 à chaque cycle de charge.

Grâce à l'invention, on s'assure que le courant délivré par la pile pendant la phase de charge du condensateur sera bien limité à une valeur maximale choisie, et ce, sans avoir à utiliser de composants supplémentaires coûteux.

Par ailleurs, en évitant l'utilisation de composants additionnels, les pertes en énergie sont limitées également aux seules contributions de l'inductance L, de la diode D et de l'interrupteur 40'. Le dispositif de l'invention permet donc d'obtenir un transfert d'énergie efficace, typiquement supérieur à 80%.

En outre, la durée totale d'une phase de charge du condensateur, correspondant à la durée totale prédéfinie du signal de commande $S_C$, est ici réduite au maximum nécessaire puisque, lors de la charge, on utilise toujours le même courant moyen $I_{Lavg}$.

Enfin, le fait de connaître au préalable la durée totale nécessaire à la charge du condensateur permet très avantageusement au module de contrôle 9 de connaître précisément les instants auxquels il doit déclencher une phase de charge du condensateur, par fermeture des moyens d'interruption 7 et ouverture simultanée des moyens d'interruption 8. Le module de contrôle 9 est ainsi adapté pour déclencher ladite première phase de charge juste avant la délivrance du pic de courant, à un instant suffisamment antérieur à l'instant de délivrance du pic de courant pour permettre la charge complète du condensateur 3.

**Revendications**

1. Dispositif d'alimentation pour un module (5) émetteur radiofréquences comportant au moins une pile (2) et un condensateur (3) formant circuit de stockage d'énergie électriquement connecté en parallèle entre la pile et le module émetteur radiofréquences, le dispositif d'alimentation comportant en outre un moyen (4') élévateur de tension pour charger le condensateur à une tension de stockage supérieure à la tension délivrée par la pile pendant une première phase de charge, le moyen (4') élévateur de tension comprenant une inductance (L) et une diode connectées en série entre la pile (2) et le condensateur (3), ainsi qu'un moyen interrupteur (40) apte à commander périodiquement, pendant la première phase de charge, une accumulation d'énergie dans l'inductance suivie d'un transfert de l'énergie accumulée dans le condensateur, le dispositif comportant en outre un module de contrôle (9) apte à générer un signal de commande ($S_C$) du moyen interrupteur (40), à déconnecter d'une part, le condensateur (3) du module (5) émetteur radiofréquences pendant la première phase de charge du condensateur, et d'autre part, le moyen (4') élévateur de la pile (2) pendant une deuxième phase de décharge du condensateur, **caractérisé en ce que** ledit signal de commande est prédéterminé et de période variable, et apte à commander, pour chaque période :

   - la fermeture dudit moyen interrupteur sur une durée ($T_{ON}$) fixe calculée de manière à permettre au courant ($I_L$) dans l'inductance de croître depuis une valeur nulle jusqu'à une valeur limite prédéfinie ($I_{Lpeak}$);
   - l'ouverture dudit moyen interrupteur sur une durée ($T_{OFF}$) variable et fonction de la tension ($V_C$) aux bornes du condensateur, définie de manière à permettre au courant ($I_L$) dans l'inductance de décroître depuis ladite valeur limite ($I_{Lpeak}$) prédéfinie jusqu'à une valeur nulle.

2. Dispositif d'alimentation selon la revendication 1, **caractérisé en ce qu'**il comporte en outre un régulateur de tension (6) commandé apte à être connecté en série entre le condensateur (3) et le module (5) émetteur radiofréquences, ledit régulateur (6) abaissant la tension de stockage à une valeur prédéterminée de tension d'alimentation délivrée au module (3) pendant la deuxième phase de décharge.

3. Dispositif d'alimentation selon l'une quelconque des revendications 1 et 2, **caractérisé en ce que** le module de contrôle (9) est adapté pour déclencher ladite première phase de charge juste avant la délivrance du pic de courant, à un instant suffisamment antérieur à l'instant de délivrance du pic de courant pour permettre la charge complète du condensateur (3).

4. Module de télérelevés pour compteur d'énergie, **caractérisé en ce qu'**il comporte un dispositif d'alimentation selon l'une quelconque des revendications 1 à 3.

**Patentansprüche**

1. Speisevorrichtung für ein Funksendemoduls (5), mit mindestens einer Zelle (2) und einem Kondensator (3), der einen Speicherkreis für elektrische Energie bildet, der zwischen der Zelle und dem Funksendemodul parallel geschaltet ist, wobei die Speisevorrichtung weiters ein Spannungserhöhungsmittel (4') zum Aufladen des Kondensators mit einer Speicherspannung, die höher als die von der Zelle abgegebene Spannung ist, während einer ersten Ladephase aufweist, welches Spannungserhöhungsmittel (4') eine Induktivität (L) und eine Diode, die zwischen der Zelle (2) und dem Kondensator (3) in Serie geschaltet sind, sowie ein Unterbrechermittel (40) aufweist, das geeignet ist, um während der ersten Ladephase periodisch eine Energiespeicherung in der Induktivität und die anschließende Übertragung der gespeicherten Energie zum Kondensator zu steuern, wobei die Vorrichtung weiters ein Steuermodul (9) aufweist, das geeignet ist, um ein Steuersignal ($S_C$) für das Unterbrechermittel (40) zu generieren, um einerseits während der ersten Phase des Aufladens des Kondensators (3) den Kondensator von dem Funksendemodul (5) zu trennen und andererseits während einer zweiten Phase des Entladens des Kondensators das Spannungserhöhungsmittel (4') von der Zelle (2) zu trennen, **dadurch gekennzeichnet, dass** das Steuersignal vorherbestimmt, von variabler Periode und geeignet ist, um für jede Phase zu steuern:

   - das Schließen des Unterbrechermittels für eine fixe Dauer ($T_{ON}$), die so berechnet ist, dass der Strom ($I_L$) in der Induktivität von einem Nullwert auf einen vorherbestimmten Grenzwert ($I_{Lpeak}$) ansteigen kann;
   - das Öffnen des Unterbrechermittels über eine variable Dauer ($T_{OFF}$), die von der Spannung ($V_C$) an den Klemmen des Kondensators abhängt und derart festgelegt ist, dass der Strom ($I_L$) in der Induktivität von dem vorherbestimmten Grenzwert ($I_{Lpeak}$) auf einen Nullwert absinken kann.

2. Speisevorrichtung nach Anspruch 1, **dadurch gekennzeichnet, dass** sie weiters einen gesteuerten Spannungsregulator (6) aufweist, der geeignet ist, um mit dem Kondensator (3) und dem Funksendemodul (5) in Serie geschaltet zu werden, wobei der Regulator (6) die Speicherspannung auf einen vorherbestimmten Wert der Speisespannung absenkt, die während der zweiten Entladephase an das Modul (3) abgegeben wird.

3. Speisevorrichtung nach einem der Ansprüche 1 und 2, **dadurch gekennzeichnet, dass** das Steuermodul (9) geeignet ist, um die erste Ladephase unmittelbar vor Abgabe der Stromspitze zu einem Zeitpunkt ausreichend vor dem Zeitpunkt der Abgabe der Stromspitze auszulösen, um die vollständige Aufladung des Kondensators (3) zu gestatten.

4. Fernablesemodul für einen Stromzähler, **dadurch gekennzeichnet, dass** es eine Speisevorrichtung nach einem der Ansprüche 1 bis 3 aufweist.

**Claims**

1. Power supply device for a radio frequency transmitter module (5), including at least one battery (2) and at least one capacitor (3) forming an energy storage circuit electrically connected in parallel between the battery and the radio frequency transmitter module, the power supply device also including voltage-raising means (4') for charging the capacitor to a storage voltage which is higher than the voltage delivered by the battery during an initial charging phase, the voltage-raising means (4') comprising an inductor (L) and a diode connected in series between the battery (2) and the capacitor (3), and switch means (40) suitable for acting periodically, during the initial charging phase, to cause an accumulation of energy in the inductor followed by a transfer of the accumulated energy into the capacitor, the device also including a control module (9) suitable for generating a control signal ($S_C$) for the switch means (40), on the one hand to disconnect the capacitor (93) from the radio frequency transmitter module (5) during the initial phase of charging the capacitor, and on the other hand to disconnect the voltage-raising means (4') from the battery (2) during a second phase of discharging the capacitor, **characterised in that** said control signal is predetermined and of variable period, and is suitable, during each period, for causing:

   - closure of said switch means over a fixed duration ($T_{ON}$) calculated in such a way as to enable the current ($I_L$) in the inductor to increase from a value of zero up to a predefined limiting value ($I_{Lpeak}$);
   - opening of said switch means over a duration ($T_{OFF}$) which is variable and a function of the voltage ($V_C$) across the terminals of the capacitor, and is defined in such a way as to enable the current ($I_L$) in the inductor to decrease from said predefined limiting value ($I_{Lpeak}$) to a value of zero.

2. Power supply device as claimed in Claim 1, **characterised in that** ut also includes a controlled voltage regulator (6) suitable for being connected in series between the capacitor (3) and the radio frequency transmitter module (5), said regulator reducing the storage voltage to a predetermined supply voltage value delivered to the module during the second discharge phase.

3. Power supply device as claimed in any one of Claims 1 and 2, **characterised in that** said control module (9) is adapted to trigger said first charging phase just before the delivery of the current peak, at an instant which is soon enough before the instant of delivery of the current peak to enable complete charging of the capacitor (3).

4. Remote reading module for an energy meter, including a power supply device as claimed in any one of Claims 1 to 3.

**FIG.1**

**FIG.2**

**FIG.3**

**FIG.4**

**FIG.5a**

**FIG.5b**

**FIG.5c**

## RÉFÉRENCES CITÉES DANS LA DESCRIPTION

**Documents brevets cités dans la description**

- EP 0718951 A

- EP 0613257 A